(19) Europäisches Patentamt
European Patent Office
Office européen des brevets

(11) **EP 1 635 478 B1**

(12) **EUROPEAN PATENT SPECIFICATION**

(45) Date of publication and mention
of the grant of the patent:
**16.06.2010 Bulletin 2010/24**

(51) Int Cl.:
**H04B 1/707** *(2006.01)*

(21) Application number: **04021428.0**

(22) Date of filing: **09.09.2004**

(54) **Method and system for signal tracking, and computer program product therefor**

Verfahren und Vorrichtung zum Signalverfolgung und Softwareprodukt dazu

Procédé et système pur la poursuite des signaux et produit logiciel correspondant

(84) Designated Contracting States:
**AT BE BG CH CY CZ DE DK EE ES FI FR GB GR HU IE IT LI LU MC NL PL PT RO SE SI SK TR**
Designated Extension States:
**AL HR LT LV MK**

(43) Date of publication of application:
**15.03.2006 Bulletin 2006/11**

(73) Proprietors:
• **Fondazione Torino Wireless Finanziaria Regionale Piemonte Finpiemonte S.p.A.**
  **10121 Torino (IT)**
• **Istituto Superiore Mario Boella sulle Tecnologie dell'Informazione e delle Telecomunicazioni**
  **10138 Torino (IT)**

(72) Inventors:
• **Dovis, Fabio**
  **c/o Politecnico di Torino**
  **10129 Torino (IT)**
• **Lo Presti, Letizia**
  **c/o Politecnico di Torino**
  **10129 Torino (IT)**
• **Mulassano, Paolo**
  **c/o Istituto Sup. Mario Boella**
  **Via P.C. Boggio 61**
  **10138 Torino (IT)**

• **Pini, Marco**
  **c/o Politecnico di Torino**
  **10129 Torino (IT)**

(74) Representative: **Bosotti, Luciano et al**
  **Buzzi, Notaro & Antonielli d'Oulx**
  **Via Maria Vittoria, 18**
  **10123 Torino (IT)**

(56) References cited:
**EP-A- 1 229 667**

• **BISCHOFF R ET AL: "Employment of a multipath receiver structure in a combined GALILEO/UMTS receiver" VTC SPRING 2002. IEEE 55TH. VEHICULAR TECHNOLOGY CONFERENCE. PROCEEDINGS. BIRMINGHAM, AL, MAY 6 - 9, 2002, IEEE VEHICULAR TECHNOLOGY CONFERENCE, NEW YORK, NY : IEEE, US, vol. VOL. 1 OF 4. CONF. 55, 6 May 2002 (2002-05-06), pages 1844-1848, XP010622135 ISBN: 0-7803-7484-3**
• **SOUROUR E ET AL: "Delay tracking for direct sequence spread spectrum systems in multipath fading channels" VEHICULAR TECHNOLOGY CONFERENCE, 1999 IEEE 49TH HOUSTON, TX, USA 16-20 MAY 1999, PISCATAWAY, NJ, USA, IEEE, US, vol. 1, 16 May 1999 (1999-05-16), pages 422-426, XP010341907 ISBN: 0-7803-5565-2**

## Description

Field of the invention

The present invention relates to techniques for signal tracking, and was developed by paying specific attention to the possible application in receivers for satellite positioning systems, such as e.g. Galileo receiver architectures.

Reference to this possible field of application is not however to be construed in a limiting sense of the scope of the invention.

Description of the related art

Navigation technology is going to become part of the so-called concept of info-mobility, where users are enabled to obtain information related to their needs and based on their position. As a consequence, navigation applications will expectedly become more and more on demand in the professional, commercial and scientific fields in the near future. New mobile terminals based on the use of Global Navigation Satellite System (GNSS), such as GPS (Global Positioning System) and the future Galileo system, and cellular networks will expectedly acquire a rapidly increasing market share.

General information about the Galileo system can be found at the web site of the European Community http: // europa.eu.int/ comm/dgs/ energy_ transport/ galileo.

Within this framework, GNSS receivers will play an essential role in all classes of possible applications. The receiver is in charge of estimating the user location by measuring the "pseudoranges" of all the satellites in view (GPS, Galileo or both of them). GNSS receivers are based on the CDMA (Code Division Multiple Access) approach. The receiver must therefore perfectly align the incoming code with a local replica of the same code (per each channel). The receiver is thus able to estimate pseudoranges that are used to calculate the user position.

Several error components may affect measurements in Global Navigation Satellite Systems (GNSS) both of the present generation (GPS) and the future generation (Galileo).

As far as the precision in user positioning is concerned, the pseudorange estimation suffers from different error sources. Such errors depend both on the external environment (e.g. ionospheric and tropospheric delays) and on the superimposition of same signal reaching the receiver via multiple paths.

This latter source of error is usually known as multipath, and leads to systematic errors in code alignment. Multipath is nowadays the major error component in the receiver measurement, specifically in the UERE (User Equivalent Range Error) budget.

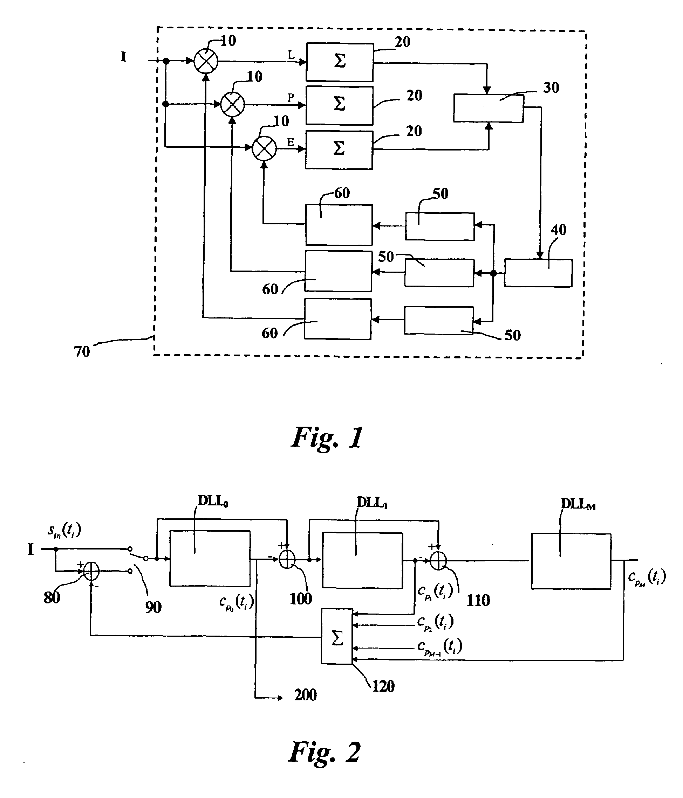

Figure 1 shows a common tracking loop for GNSS receivers.

Specifically, in Figure 1, the reference number 70 designates as a whole a Delay Lock Loop structure intended to operate on input samples I coming from an upfront analog-to-digital converter (not shown), and including:

- three multiplication blocks 10;
- three summation blocks 20;
- a so-called E-L block 30, which implements a discriminator function; the definition of such a function creates the so called S-curve;
- a loop Filter 40;
- three numerical controlled oscillator (NCO) blocks 50, to produce early, late and prompt replicas of the local code; and
- three code generator blocks 60 for early, late and prompt replicas of the local code.

The whole of the foregoing corresponds to an overall architecture that is well known in the art, thus making it unnecessary to provide a more detailed description herein.

Several techniques have been introduced in the past regarding the receiver architecture, in order to limit the effects of multipath on user positioning.

Multipath rejection strategies work on the receiver tracking-loop (one per each receiver channel), which is in charge of following the evolution of the satellite signal right after the acquisition phase. In common implementations, each single GNSS receiver channel is made by a DLL (Delay Lock Loop), which is in charge of tracking the acquired satellite signal. Multipath propagation affects operation of the DLL by generating a shift on the ideal DLL lock point. In standard multipath mitigation strategies, the input multipath is considered as interference to be cancelled or rejected.

Among the multipath rejection techniques (already used) the Narrow Correlator, the Strobe Correlator and the more recent MEDLL (Multipath Estimating DLL) techniques can be cited. Each of these techniques is based on the concept that multipath propagation modifies the shape of the S-curve (computed by the Discriminator) within the DLL. Therefore, in different ways the aforementioned methods allows reducing the influence of multipath on the lock point of the DLL.

Additional literature addressing the issue of multipath rejection includes:

- US 5 347 536, "Multipath noise reduction for spread spectrum signals";
- US-B-6 031 881, "Method for mitigating multipath effects in radio ranging systems";
- US-B-6 636 558, "Multipath mitigation approach for spread spectrum ranging/positioning systems";
- L.R. Weill, "Multipath mitigation", GPS World, June 1, 2003;
- M.S. Braasch, "Performance comparison of multipath mitigation receiver architectures", in Proceedings IEEE PLANS 1996 Position Location and Navigation Symposium, April 22-26, 1996, pp. 1309-1315;

- T. S. Rappaport, "Wireless Communication", Prentice Hall, 1996, Ch.6 pp. 336-338;

- W. Parkinson, J. J. Spilker, "Global Positioning System: Theory and application", Progress in Astronautic and Aeronautics 1996, Vol.I Ch.14 pp. 547-568;

- G. W. Hein, J. Godet, J. Issler, J. C. Martin, R L. Rodriguez, T. Pratt, "The GALILEO Frequency Structure and Signal Design", Proceedings of the ION GPS 2001, September 11-14, 2001, pp. 1273-1282;

- R.D.J. Van Nee, J. Siereveld, P. Fenton, B. Townsend, "The multipath estimating delay lock loop approaching theoretical accuracy limits", in Proceedings of the IEEE Position Location and Navigation Symposium, Las Vegas (USA), April 15-198, 1994;

- R.D.J. Van Nee, "The multipath estimating delay lock loop", in Proceedings of the IEEE Second International Symposium on Spread Spectrum Techniques and Application (ISSSTA '92), Yokohama (JP), November 29 - December 2, 1992 pp. 39-42; and

- M.C. Laxton and S.L. De Vilbiss, "GPS multipath mitigation during code tracking", in Proceedings of the American Control Conference, Albuquerque, (New Mexico), June 1997, pp. 1429-1433, and

- BISCHOFF R ET AL: "Employment of a multipath receiver structure in a combined GALILEO/UMTS receiver" VTC SPRING 2002. IEEE 55TH. VEHICULAR TECHNOLOGY CONFERENCE, PROCEEDINGS. BIRMINGHAM, AL, MAY 6 - 9, 2002, IEEE VEHICULAR TECHNOLOGY CONFERENCE, NEW YORK, NY: IEEE, US, VOL. 1 OF 4. CONF. 55, 6 May 2002 (2002-05-06), pages 1844-1848, XP010622135 ISBN: 0-7803-7484-3, which was taken as a model for the preambles of claims 1 and 8.

Object and summary of the invention

In view of the foregoing, the need is felt for an improved arrangement for signal tracking that efficiently removes the error due to multipath in order to improve performance of user receivers.

The object of the invention is thus to provide a fully satisfactory response to that need.

According to the present invention, that object is achieved by means of a method having the features set forth in claim 1 that follows, that are included in all respects in the disclosure of this application. The invention also relates to a corresponding system as called for in claim 8 as well as a related computer program product as called for in claim 16, loadable in the memory of at least one computer and including software code portions for performing the steps of the method of the invention when the product is run on a computer. As used herein, reference to such a computer program product is intended to be equivalent to reference to a computer-readable medium containing instructions for controlling a computer system to coordinate the performance of the method of the invention. Reference to "at least one computer" is evidently intended to highlight the possibility for the present invention to be implemented in a distributed/modular fashion.

A preferred embodiment of the invention is thus an arrangement for tracking an input signal including a line-of-sight (LOS) component and at least one multipath component.

The basic idea underlying the present invention is an innovative approach for multipath mitigation that can be defined "Turbo" DLL (Delay Lock Loop).

This approach primarily relates to the internal architecture of a GNSS receiver, with specific reference to the internal tracking loop structure.

The DLL approach described herein is quite different from multipath rejection techniques of the prior art. In fact, the arrangement described herein employs a set of DLLs to track the incoming signal replicas. This approach is somehow similar to the well-know RAKE receiver adopted in CDMA communications, because the delayed version of the same signal is treated as an additional input and is not rejected.

In the arrangement described herein, the bank of DLLs included in a receiver is able to follow the evolution of multipath components, and information thus derived is fed back the first DLL of the chain. In this sense, the tracking of multipath components is handled as a sort of information, which is looped in order to improve the overall wireless performance of the receiver tracking system. The word "Turbo" was thus referred to in order to highlight the capability of the system to boost overall performance.

In common rejection techniques, multipath is not tracked. For instance, standard DLL arrangement commonly resort to early-late approach giving rise to a narrow correlator that aims at creating a feedback signal purged from the influence of multipath.

Conversely, the solution described herein employs a set of more than one DLL per each channel able to track the incoming signal replicas, which results in a slight increase in complexity. As indicated, this strategy is similar to the RAKE approach, used in communication receiver, because the delayed versions of the same signal are treated as additional input signals.

Brief description of the annexed drawings

The invention will now be described, by way of example only, with reference to the enclosed figures of drawing, wherein:

- Figure 1 has been already described in the foregoing;

- Figure 2 shows an exemplary signal tracking arrangement wherein the information concerning the multipath tracking is fed back to a first delay lock loop;

- Figure 3 shows a possible implementation of the architecture in Figure 2;
- Figure 4 shows a multipath monitoring unit for use in the arrangement described herein;
- Figure 5 is a flow diagram of the operating step of the structure described herein in a generic case;
- Figure 6 is a flow diagram of operation of the structure described herein when a line-of-sight (LOS) and a single multipath component are considered;
- Figure 7 shows the tracking behaviour of the arrangement described herein; and
- Figure 8 shows, by way of comparison, the systematic errors in a conventional tracking and in structure described herein.

Detailed description of preferred embodiments of the invention

Referring to Figure 2, the signals I coming from the upfront A/D converter (again not shown) can be expressed as:

$$s_{in}(t_i) = \sum_{j=0}^{M} a_j(t_i) c(t_i - \tau_j)$$

where

- $s_{in}(t_i)$ are the samples of the input signal comprised of one Line-Of-Sight (LOS) and M multipath components;
- $t_i$, is the discrete time;
- $a_0 c(t_i - \tau_0)$ represents the LOS component;
- $c(t_i - \tau_j)$ is the satellite spreading code delayed by $\tau_j$; and
- $a_j$ represents the amplitude and the phase rotation of the j-th path.

Of course the signals I coming from the upfront A/D converter also include a noise component. Such a noise component has not been expressly considered since this noise component is of no relevance in explaining and understanding operation of the arrangement described herein.

In Figure 2 a first Delay Lock Loop (designated $DLL_0$) is shown having an associated input switch 90. The switch 90 can assume either of a first and a second position to feed to the Delay Lock Loop $DLL_0$ with either of the incoming signal $s_{in}(t_i)$ or a signal that allows the tracking of multipath components (as better described in the following), respectively.

In the following, it will be assumed that operation of the arrangement shown starts with the switch 90 in the first position.

In these conditions, the incoming signal $s_{in}(t_i)$ is fed to a first Delay Lock Loop, designated $DLL_0$. The

Delay Lock Loop $DLL_0$ is intended to "lock" on the input signal $s_{in}(t)$. The signal outgoing from $DLL_0$, $c_{p0}(t_i)$, thus expresses the result of tracking the LOS signal.

The signal $c_{p0}(t_i)$ is fed (with a negative sign) to a subtraction node 100. The subtraction node 100 calculates the difference between the incoming signal $s_{in}(t_i)$ and the signal $c_{p0}(t_i)$ outgoing from $DLL_0$.

The resulting signal $(s_{in}(t_i) - c_{p0}(t_i))$, which corresponds to the multipath component(s), is fed to a second DLL of the chain, designated $DLL_1$.

The Delay Lock Loop $DLL_1$ is intended to "lock" on the multipath component $(s_{in}(t_i) - c_{p0}(t_i))$. The signal outgoing from $DLL_1$, $c_{p1}(t_i)$ is fed to a subtraction node 110 that calculates the difference between the signal from node 100 and the signal $c_{p1}(t_i)$ from $DLL_1$. The signal $c_{p1}(t_i)$ thus expresses the result of tracking the first multipath component.

The process outlined in the foregoing can be notionally repeated by providing, in addition to the Delay Lock Loop $DLL_0$, a generic number M of Delay Lock Loops, each intended to lock on a signal obtained by subtracting, from the input signal of the Delay Lock Loop located immediately "upstream" in the chain, the "locked" signal generated by such Delay Lock Loop located immediately upstream.

The output signal from the j-th Delay Lock Loop at time $t_i$ is designated $c_{pj}(t_i)$. All of the signals $c_{pj}(t_i)$ with j going from 1 to M are fed to a summation block 120; this block 120 calculates the whole contribute of the M multipath components. The summation block 120 adds the signals outgoing from the DLLs of the chain, and the signal coming out from block 120 correspond to the whole contribute of the M multipath components.

The signal coming out from the summation block 120 is fed to a subtraction node 80 that calculates the difference between the incoming signal $s_{in}(t_i)$ and the signal coming from block 120. The resultant signal coming out from node 80 corresponds to the LOS signal plus a residual error.

Finally, reference 200 designates the "useful" signal that resulting from tracking the LOS signal and can be used in the pseudorange estimation. This signal is essentially "clean" in that the contribution of the multipath components has been minimized, i.e. notionally removed.

Those of skill in the art will promptly appreciate that the arrangement described herein can be satisfactorily implemented by using even just one or two additional DLLs, namely $DLL_1$ and, possibly, $DLL_2$. This is because most of the disruptive effect of multipath is primarily related to the first (and second) components of multipath.

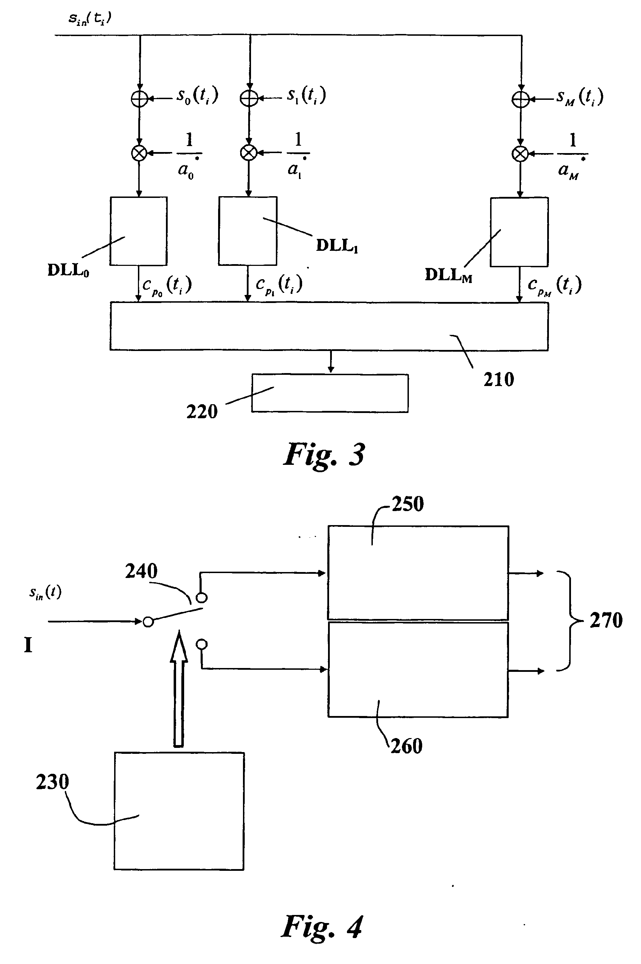

Figure 3 shows an alternative implementation of the position of the architecture shown in Figure 2 including the various DLLs where reference number 210 designates a signal-processing block and reference number 220 designates an output signal.

In the block diagram of Figure 3, the following definitions apply:

$$s_z(t_i) = \sum_{\substack{j=0 \\ j \neq z}}^{M} a^*_j(t_i) c_{pj}(t_i - \tau^*_j)$$

where

- $s_z(t_i)$ is the signal to be subtracted from the input in order to allow the tracking of the j-th multipath component;
- $c_{pj}(t)$ is the local code resulting from the tracking operation performed by the j-th DLL; and
- $a_j$ represents the amplitude and the phase rotation of the j-th path and the star "*" in the equations represents the estimated values.

Once the additional DLL(s) in the chain shown is/are able to follow the evolution of multipath components, the corresponding information is fed back to the first DLL of the chain, namely DLL$_0$. In this sense, the tracking of multipath components is a sort of information, which is looped in order to improve the overall performance of the receiver tracking system.

The schematic block diagram of Figure 4 shows the possible use of the arrangement described herein in combination with a conventional locking arrangement within the framework of a tracking system. The corresponding explanation will be given in connection with the exemplary case of an input signal comprised of the LOS signal and one multipath component.

In the block diagram of Figure 4, reference 230 designates a Multipath Monitoring Unit. The Multipath Monitoring Unit 230 estimates the multipath amplitude and compares it with a predefined threshold in order to determine its distortion effect on the so-called S-curve. As is well known, the S-curve is the function used in a DLL to generate the correction signal in the tracking loop starting from the relative delay between the input code and the local code.

The Multipath Monitoring Unit 230 plays an important role for operation of the tracking system shown. That role is somewhat akin to the role of the so-called Multiple Correlator Estimation Unit (MCEU) in a Modified RAKE Delay-Locked Loop. Such a Multiple Correlator Estimation Unit is presented e.g. in M. C. Laxton and S. L. De Vilbiss, "GPS Multipath Mitigation During Code Tracking," in Proceedings of the American Control Conference, (Albuquerque, New Mexico), pp. 1429-1433, June 1997.

The Multipath Monitoring Unit 230 operates on a switch 240 and selects the operating mode. If the level of the multipath is less than a predefined threshold, the local code 270, used in the pseudorange estimation, is supplied from a standard tracking system (e.g. a single narrow correlator 250).

Conversely, if the level of the multipath exceeds the predefined threshold, the local code 270 used in the pseudorange estimation, is supplied by a "Turbo" DLL structure of the kind shown in Figures 2 or 3, designated 260.

In brief, the input base-band signal, comprised (in the exemplary case considered) of the superposition of the LOS and one multipath component, is processed by a first DLL (designated DLL$_0$ in Figure 2 and 3).

Due to the presence of multipath, the S-curve is distorted (a multipath delayed less than 1.5 chips with respect to LOS in considered). As a consequence, the local code from DLL$_0$, namely $c_{p0}(t_i)$ is not perfectly aligned with respect to the LOS signal.

At this stage, the "punctual" code is not used yet to estimate the pseudorange as in a generic GNSS receiver. However, it is subtracted from the incoming signal in order to generate the input for the second DLL (designated DLL$_1$ in Figure 2 and 3) in charge of tracking the multipath components.

Such an input is composed by the summation of the multipath and an error contribution that represents the ambiguity on the lock point of DLL$_0$. Even if this residual LOS power is not zero, its level is significantly reduced when compared with the input signal.

Therefore, after a transient time, the loop DLL$_1$ can track the multipath.

As soon as the loop DLL$_1$ is locked on the multipath, the punctual local code of the DLL$_1$ can be subtracted from the input signal of DLL$_0$. At this stage, such a signal is composed by the sum of the LOS component plus a residual multipath component that represents the code error alignment on the multipath tracking. The information on multipath is then fed back to the DLL$_0$.

Therefore, the information of the multipath delay is used to create a better input for the DLL$_0$, thus leading to an enhancement of the input signal for the loop DLL$_0$.

This strategy is iteratively repeated, so that, the better the LOS tracking, the better the multipath alignment and vice versa.

Therefore, after a few iterations, the power of the residual component signals at the input of the two DLLs is significantly reduced (virtually nil), the S-curve distortion is recovered and the local code of the first DLL (DLL$_0$) can be used in the final counting for pseudorange estimation.

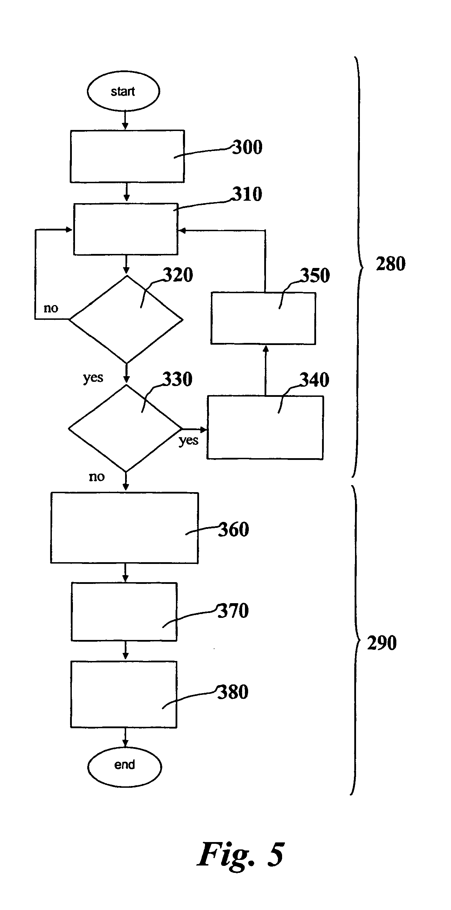

Figure 5 is a flow diagram of the operating step of the tracking structure described herein in the generic case of M-multipath components.

In a step 300, the Multipath Monitoring Unit 230 estimates the LOS and the multipath amplitudes. In a step 310 the architecture tracks the j-th multipath component. In a decision step 320, the j-th DLL is controlled. If the j-th DLL is not locked the method returns to step 310. Otherwise, if the j-th DLL is locked, the method continues in a decision step 330.

If others multipath processes have to be tracked, in a step 340 the local instances already tracked are subtracted from the incoming signal and in a step 350 the index i is incremented.

If no other multipath processes have to be tracked, in a step 360, starting from $DLL_1$ to $DLL_M$, all the punctual local codes are subtracted from the incoming signal. In a step 370 the resulted signal is feed back to $DLL_0$.

Finally, in a step 380, pseudorange estimation is performed based on the local instance of $DLL_0$.

In Figure 5 reference number 280 designates transient operation of the arrangement just described, while reference number 290 designates steady state operation.

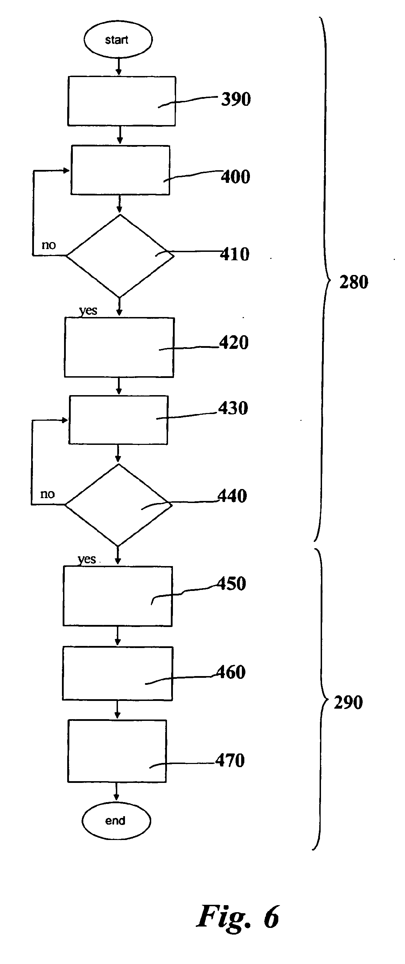

Figure 6 is a flow diagram of the operating steps of the tracking structure described herein when a single multipath component is considered in addition to the LOS signal.

Once again, in Figure 6 reference number 280 designates the Transient Time, while the reference number 290 designates the Steady State.

In a step 390 the Multipath Monitoring Unit 230 estimates the LOS and the multipath amplitudes. In a step 400 the architecture tracks the LOS component. In a decision step 410 the loop $DLL_0$ is controlled. If the $DLL_0$ is not locked the method returns to the step 400. Otherwise, if the loop $DLL_0$ is locked, the process continues in a step 420. In the step 420 the "punctual" local code of the loop $DLL_0$ is subtracted from the incoming signal. In a step 430, the architecture tracks the multipath component. In a decision step 440 the loop $DLL_1$ is controlled. If the loop $DLL_1$ is not locked, the method returns to step 430. Otherwise, if the loop $DLL_1$ is locked, the method continues in a step 450. In a step 450, the punctual local code of the loop $DLL_1$ is subtracted from the incoming signal. In a step 460, the resulting signal is fed back to $DLL_0$.

Finally, in a step 470, pseudorange estimation is performed based on the local instance of $DLL_0$.

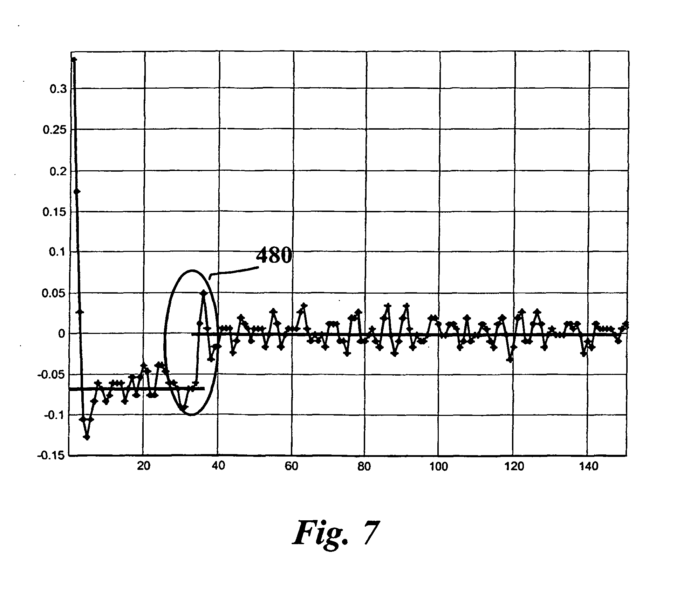

Figure 7 is an exemplary diagram of a possible tracking behaviour of the arrangement described herein.

Specifically, in Figure 7 the abscissa scale is a time scale. As is well known, operation of a tracking arrangement of the kind considered herein is based on subsequent "integration" periods. For that reason the time scale of Figure 7 is expressed in number of integration periods considered. The ordinate scale represents the tracking error in chip units.

The reference 480 designates the instant where the multipath tracking information provided by the other DLL(s), $DDL_1$, ... $DLL_M$ is fed back to the first DLL of the chain ($DLL_0$).

Switching of the switch 90 occurs when the cascaded DLL(s) in question have reached their locking states, namely only when the or each of the delay locked signals $c_{p1}(t_i)$ to $c_{pM}(t_i)$ produced by the set of delay locked loop(s) $DLL_1$ to $DLL_M$ is locked to a respective one of the multipath components. This event is identified (in a known manner) by the/or each DLL involved and a corresponding signal is sent towards the switch 90.

This process leads to the switch 90 being switched from the first position to the second position shown in Figure 2 so that the first DLL in the chain (namely $DLL_0$) is fed with the signal from the summation node 80 (which receives - with a negative sign - the output signal from the summation node 120). Stated otherwise, the switch 90 essentially plays the role of selectively "activating" the summation nodes 120 and 80 so that the multipath tracking information is fed back to the basic delay lock loop $DLL_0$.

Before the multipath tracking information is fed back to the basic delay lock loop $DLL_0$ (i.e. before the summation nodes 120 and 80 are "activated" by the switch 90) the average value of the lock points is not zero. Conversely, after the multipath tracking information is fed back to the basic delay lock loop $DLL_0$ (i.e. the average value of the lock points rapidly becomes (and remains) zero.

Those of skill in the art will appreciate that the presence of the switch 90 is not a mandatory requirement in that the first delay lock loop $DLL_0$ might in fact be fed with the signal from the summation node 80 even from the start of operation of the arrangement. The presence of the switch 90 (or any other equivalent arrangement adapted to ensure that the first DLL, namely $DLL_0$, should receive the feedback information from the subsequent DLL(s) only when these are properly locked) is however preferable.

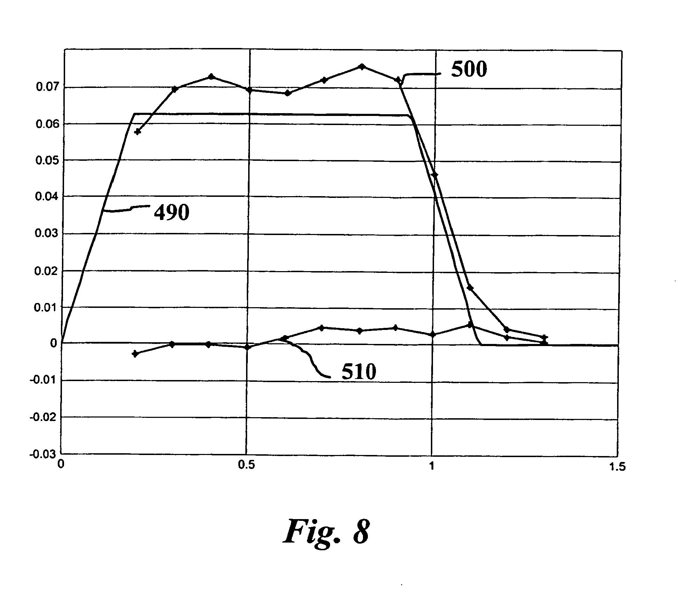

Figure 8 shows, by way of comparison, the systematic errors demonstrated in tracking a GPS C/A (coarse Acquisition) code by a tracking arrangement including a single DLL and by a tracking arrangement as described herein including one additional DLL (namely a basic delay lock loop $DLL_0$ and additional delay lock loop $DLL_1$).

Specifically in the diagrams of figure 8 the abscissa scale is expressed in chip units in terms of the relative delay of the multipath component with respect to the line-of-sight component.

The ordinate scale expresses (again in chip units) the alignment error resulting from the tracking operation, namely the error between the code conveyed by the line-of-sight component and the code derived by means of the tracking operation.

Specifically, line 490 shows the theoretical multipath envelope of a single DLL narrow-correlator with 0,125 spacing.

Line 500 is the systematic error obtained using a single DLL narrow-correlator with 0,125 spacing.

Line 510 is the systematic error obtained using the structure described herein.

The results shown in Figure 8 refer to a case where the multipath component has an amplitude equal to one half the amplitude of the line-of-sight component, both components having the same phase.

It will be appreciated that the systematic error has an average value essentially equal to zero in the case of the structure described herein.

The architecture described herein, as well as the use of a Multipath Monitoring Unit, can be easily extended to a general case where M replicas of the signal arrive at the receiver.

A number of significant features of the arrangement described herein are the following:

- the arrangement described herein uses more than one DLL per each receiver channel;
- the arrangement described herein is able to track the input LOS and M multipath components, where M is a variable number; and
- the arrangement described herein exploits the multipath tracking process in order to refine the input signal for the first DLL ($DLL_0$).

The basic advantages in comparison with standard DLL arrangements can be summarised as follows:

- the arrangement described herein tracks the multipath components at the receiving antenna, and exploits the related tracking information in order to counter the negative effects of multipath: consequently, the arrangement described herein - exploits - the multipath components instead of rejecting them;
- the multipath effects on the pseudorange estimation (i.e., the receiver measurement made on each channel) are almost completely removed; and
- the arrangement described herein is adapted to be employed within any GNSS receiver architecture, e.g. both to GPS and to Galileo receivers.

Consequently, without prejudice to the underlying principles of the invention, the details and the embodiments may vary, also appreciably, with reference to what has been described by way of example only, without departing from the scope of the invention as defined by the annexed claims.

**Claims**

1. A method of tracking an input signal ($s_{in}(t_i)$) including a line-of-sight component and at least one multipath component, the method including the steps of:

    - subjecting said input signal ($S_{in}(t_i)$) to a first tracking ($DLL_0$) of said line-of-sight component therein to derive therefrom a delay locked signal ($cp_0(t_i)$) locked to said line-of-sight component;
    - subtracting (100) said locked signal ($cp_0(t_i)$) from said input signal ($s_{in}(t_i)$) to derive a resulting signal;
    - tracking ($DLL_1$) said resulting signal to derive therefrom at least one further delay locked signal ($c_{p1}(t_i)$) locked to said resulting signal, and

    - subtracting (120, 80) said at least one further locked signal ($c_{p1}(t_i)$ from said input signal ($s_{in}(t_i)$)) subject to tracking ($DLL_0$),

    **characterized in that** it includes the step of feeding back to said first tracking said input signal ($s_{in}(t_i)$) having said at least one further locked signal ($c_{p1}(t_i)$) subtracted therefrom.

2. The method of claim 1, wherein said input signal ($s_{in}(t_i)$) includes a line-of-sight component and a plurality of multipath components, the method **characterized in that** it includes the steps of:

    - tracking said multipath components of said input signal ($s_{in}(t_i)$) to generate therefrom a plurality of delay locked signals ($c_{p1}(t_i)$ to $c_{pM}(t_i)$) each locked to a respective one of said multipath components, and
    - subtracting (120, 80) said plurality of further locked signals ($c_{p1}(t_i)$ to $c_{pM}(t_i)$) from said input signal ($s_{in}(t_i)$) subject to tracking ($DLL_0$), and
    - feeding back to said first tracking said input signal ($s_{in}(t_i)$) having said plurality of further locked signals ($c_{p1}(t_i)$ to $c_{pM}(t_i)$) subtracted therefrom.

3. The method of claim 2, **characterized in that** it includes the steps of:

    - tracking said multipath components of said input signal ($s_{in}(t_i)$) in a cascade of tracking operations ($DLL_1$, ..., $DLL_M$), and
    - performing each such tracking operation ($DLL_1$, ..., $DLL_M$) on a respective resulting signal obtained by subtracting (100, 110) from the input signal of the tracking operation immediately upstream in the cascade the further locked signal ($c_{p1}(t_i)$ to $c_{pM}(t_i)$) generated in said tracking operation immediately upstream in the cascade, wherein the input signal of the uppermost tracking operation ($DLL_1$) in said cascade is said resulting signal.

4. The method of any of the previous claims 1 to 3, **characterized in that** it includes the step of:

    - detecting said at least one further delay locked signal ($c_{p1}(t_i)$) being locked to said resulting signal, and
    - subtracting (120, 80) said at least one further locked signal ($c_{p1}(t_i)$) from said input signal ($s_{in}(t_i)$) subject to tracking when (480) said at least one further locked signal ($c_{p1}(t_i)$) is locked to said resulting signal.

5. The method of claim 2, **characterized in that** it includes the steps of:

- detecting said plurality of delay locked signals ($c_{p1}(t_i)$ to $c_{pM}(t_i)$) being each locked to said respective one of said multipath components, and
- subtracting (120, 80) said plurality of further locked signals ($c_{p1}(t_i)$ to $c_{pM}(t_i)$) from said input signal ($s_{in}(t_i)$) subject to tracking ($DLL_0$) when (480) said plurality of delay locked signals ($c_{p1}(t_i)$ to $c_{pM}(t_i)$) are locked to said respective one of said multipath components.

6. A method of tracking an input signal ($s_{in}(t_i)$) including a line-of-sight component and at least one multipath component, **characterized in that** it includes the steps of:

   - estimating (230) the level of said at least one multipath component,
   - defining a multipath level threshold, and
   - activating (240) the process of any of claims 1 to 5 when the level of said at least one multipath component reaches said threshold.

7. The method of any of the previous claims 1 to 6, wherein said input signal ($s_{in}(t_i)$) conveys pseudorange information related to the distance from a source of said input signal ($s_{in}(t_i)$) to a reception point of said input signal ($s_{in}(t_i)$), including the step of using (200) said delay locked signal ($c_{p0}(t_i)$) locked to said line-of-sight component for estimating said pseudorange information.

8. A system for tracking an input signal ($s_{in}(t_i)$) including a line-of-sight component and at least one multipath component, the system including:

   - a first delay lock loop ($DLL_0$) configured for tracking said line-of-sight component to derive therefrom a locked signal ($c_{p0}(t_i)$) locked to said line-of-sight component;
   - a subtraction node (100) for subtracting said locked signal ($c_{p0}(t_i)$) from said input signal ($s_{in}(t_i)$) to derive a resulting signal;
   - at least one further delay lock loop ($DLL_1$, ..., $DLL_M$) to track said resulting signal and derive therefrom at least one further locked signal ($c_{p1}(t_i)$, ..., $c_{pM}(t_i)$) locked to said resulting signal, and
   - at least one further subtraction node (120, 80) for subtracting said at least one further locked signal ($c_{p1}(t_i)$) from said input signal ($s_{in}(t_i)$), **characterized in that** said at least one further subtraction node (120, 80) is configured for feeding back to said first delay lock loop ($DLL_0$) said input signal ($s_{in}(t_i)$) having said at least one further locked signal ($c_{p1}(t_i)$) subtracted therefrom.

9. The system of claim 8, wherein said input signal ($s_{in}$ ($t_i$)) includes a line-of-sight component and a plurality of multipath components, the system **characterized in that** it includes:

   - a plurality of delay locked loops ($DLL_1$, ..., $DLL_M$) configured for tracking said multipath components of said input signal ($s_{in}(t_i)$) to generate therefrom a plurality of delay locked signals ($c_{p1}(t_i)$ to $c_{pM}(t_i)$) each locked to a respective one of said multipath components, and
   - said at least one further subtraction node (120, 80) configured for subtracting said plurality of further locked signal ($c_{p1}(t_i)$ to $c_{pM}(t_i)$) from said input signal ($s_{in}(t_i)$) and feeding back to said first delay lock loop ($DLL_0$), said input signal ($s_{in}(t_i)$) having said plurality of further locked signals ($c_{p1}(t_i)$ to $c_{pM}(t_i)$) subtracted therefrom.

10. The system of claim 9, **characterized in that** it includes:

    - a cascade of delay lock loops ($DLL_1$, ..., $DLL_M$) configured for tracking said multipath components of said input signal ($s_{in}(t_i)$), and
    - a respective subtraction node (100, 110) at the input of each delay lock loop ($DLL_1$, ..., $DLL_M$) in said cascade to generate a respective resulting signal obtained by subtracting (100, 110) from the input signal of the delay lock loop immediately upstream in the cascade the further locked signal ($c_{p1}(t_i)$ to $c_{pM}(t_i)$) generated in said delay lock loop immediately upstream in the cascade, wherein the input signal of the first delay lock loop ($DLL_1$) in said cascade is said resulting signal.

11. The system of any of the previous claims 8 to 10, **characterized in that** it includes:

    - said at least one further delay lock loop ($DLL_1$, ..., $DLL_M$) configured for detecting said at least one further delay locked signal ($c_{p1}(t_i)$) being locked to said resulting signal, and
    - said at least one further subtraction node (120, 80) selectively activatable (90) for subtracting said at least one further locked signal ($c_{p1}(t_i)$) from said input signal ($s_{in}(t_i)$) subject to tracking when (480) said at least one further locked signal ($c_{p1}(t_i)$) is locked to said resulting signal.

12. The system of claim 9, **characterized in that** it includes:

    - said plurality of delay locked loops ($DLL_1$, ..., $DLL_M$) configured for detecting said plurality of delay locked signals ($c_{p1}(t_i)$ to $c_{pM}(t_i)$) being each locked to said respective one of said multipath components, and

- said at least one further subtraction node (120, 80) selectively activatable (90) for subtracting (120, 80) said plurality of further locked signal ($c_{p1}(t_i)$ to $c_{pM}(t_i)$) from said input signal ($s_{in}(t_i)$) subject to tracking ($DLL_0$) when (480) said plurality of delay locked signals ($c_{p1}(t_i)$ to $c_{pM}(t_i)$) are locked to said respective one of said multipath components.

13. The system of either of claims 11 or 12, **characterized in that** it includes at least one switch (90) for selectively activating said at least one further subtraction node (120, 80).

14. The system of any of claims 8 to 13, **characterized in that** it includes an associated multipath monitoring unit (230) configured for:

   - estimating (230) the level of said at least one multipath component,
   - defining a multipath level threshold, and
   - activating (240) the system when the level of said at least one multipath component reaches said threshold.

15. The system of any of the previous claims 8 to 14, for use in tracking an input signal ($s_{in}(t_i)$) conveying pseudorange information related to the distance from a source of said input signal ($s_{in}(t_i)$) to a reception point of said input signal ($s_{in}(t_i)$), the system including said delay lock loop ($DLL_0$) configured for delivering (200) said delay locked signal ($c_{p0}(t_i)$) locked to said line-of-sight component as an estimation of said pseudorange information.

16. A computer program product, loadable in the memory of at least one computer and including software code portions specially adapted to perform the method of any of claims 1 to 7.

**Patentansprüche**

1. Ein Verfahren zum Verfolgen eines Eingangssignals ($s_{in}(t_i)$), in dem eine Sichtlinien-Komponente und mindestens eine Mehrpfad-Komponente enthalten ist, wobei das Verfahren die Schritte enthält:

   Unterwerfen des Eingangssignals ($s_{in}(t_i)$) einer ersten Verfolgung ($DLL_0$) der darin enthaltenen Sichtlinien- Komponente, um daraus ein verzögerungs-verriegeltes Signal ($c_{p0}(t_i)$) abzuleiten, das mit der Sichtlinien-Komponente verriegelt ist;
   Subtrahieren (100) des verriegelten Signals ($c_{p0}(t_i)$) vom Eingangssignal ($s_{in}(t_i)$), um daraus ein resultierendes Signal abzuleiten;
   Verfolgen ($DLL_1$) des resultierenden Signals,

um daraus mindestens ein weiteres verzögerungs-verriegeltes Signal ($c_{p1}(t_i)$) abzuleiten, das mit dem resultierenden Signal verriegelt ist; und
   Subtrahieren (120, 80) des mindestens einen weiteren verriegelten Signals ($c_{p1}(t_i)$) vom Eingangssignal ($s_{in}(t_i)$), das der Verfolgung ($DLL_0$) unterliegt,

   **dadurch gekennzeichnet, dass** es den Schritt enthält des Zurückführens zum ersten Verfolgungssignal des Eingangssignals ($s_{in}(t_i)$), von dem das mindestens eine weitere verriegelte Signal ($c_{p1}(t_i)$) subtrahiert wurde.

2. Das Verfahren von Anspruch 1, worin das Eingangssignal ($s_{in}(t_i)$) eine Sichtlinien-Komponente enthält und eine Vielzahl von Multipfad-Komponenten, wobei das Verfahren **dadurch gekennzeichnet ist, dass** es die Schritte enthält:

   Verfolgen der Multipfad-Komponenten des Eingangssignals ($s_{in}(t_i)$), um daraus eine Vielzahl von verzögerungs-verriegelten Signalen ($c_{p1}(t_i)$ to $c_{pm}(t_i)$) zu erzeugen, von denen jedes mit einer entsprechenden Multipfad-Komponente verriegelt ist, und
   Subtrahieren (120, 80) der Vielzahl von weiteren verriegelten Signalen ($c_{p1}(t_i)$ to $c_{pm}(t_i)$) vom Eingangssignal ($s_{in}(t_i)$), das der Verfolgung ($DLL_0$) unterliegt, und
   Zurückführen zum ersten Verfolgungssignal des Eingangssignals ($s_{in}(t_i)$), von dem die Vielzahl von weiteren verriegelten Signalen ($c_{p1}(t_i)$ to $c_{pm}(t_i)$) subtrahiert wurde.

3. Das Verfahren von Anspruch 2, **dadurch gekennzeichnet, dass** es die Schritte enthält:

   Verfolgen der Multipfad-Komponenten des Eingangssignals ($s_{in}(t_i)$) in einer Kaskade von Verfolgungsoperationen (DLL1, ...$DLL_m$), und
   Durchführen jeder derartigen Verfolgungsoperation ($DLL_1$, ...$DLL_m$) auf ein jeweiliges resultierendes Signal, das erhalten wurde durch Subtrahieren (100. 110) vom Eingangssignal der Verfolgungsoperation unmittelbar stromaufwärts in der Kaskade das weitere verriegelte Signal ($c_{p1}(t_i)$ to $c_{pm}(t_i)$), das in der Verfolgungsoperation unmittelbar stromaufwärts in der Kaskade erzeugt wurde, wobei das Eingangssignal der obersten Verfolgungsoperation ($DLL_1$) in der Kaskade das resultierende Signal ist.

4. Das Verfahren nach irgendeinem der vorstehenden Ansprüche 1 bis 3, **dadurch gekennzeichnet, dass** es die Schritte enthält:

Feststellen des mindestens einen weiteren verzögerungs-verriegelten Signals ($c_{p1}(t_i)$), das mit dem resultierenden Signal verriegelt ist, und Subtrahieren (120, 80) des mindestens einen weiteren verriegelten Signals ($c_{p1}(t_i)$) vom Eingangssignal ($s_{in}(t_i)$), das der Verfolgung unterliegt, wenn (480) das mindestens eine weitere verriegelte Signal ($c_{p1}(t_i)$) mit dem resultierenden Signals verriegelt ist.

5. Das Verfahren nach Anspruch 2 **dadurch gekennzeichnet, dass** es die Schritte enthält:

Feststellen der Mehrzahl von verzögerungs-verriegelten Signalen ($c_{p1}(t_i)$ to $c_{pm}(t_i)$), von denen jedes mit der jeweiligen Multipfad-Komponente verriegelt ist, und Subtrahieren (120, 80) der Vielzahl von weiteren verriegelten Signalen ($c_{p1}(t_i)$ to $c_{pm}(t_i)$) vom Eingangssignal ($s_{in}(t_i)$), das der Verfolgung ($DLL_0$) unterliegt, wenn (480) die Vielzahl von verzögerungs-verriegelten Signalen ($c_{p1}(t_i)$ to $c_{pm}(t_i)$) mit der jeweiligen Multipfad Komponente verriegelt ist.

6. Ein Verfahren zum Verfolgen eines Eingangssignals ($s_{in}(t_i)$), das eine Sichtlinien-Komponente und mindestens eine Multipfad-Komponente enthält, **dadurch gekennzeichnet, dass** es die Schritte enthält:

Abschätzen (230) des Pegels der mindestens einen Multipfad-Komponente; Definieren eines Schwellwerts für Multipfad-Pegel, und Aktivieren (240) des Verfahrens nach einem der Ansprüche 1 bis 5, wenn der Pegel der mindestens einen Multipfad-Komponente den Schwellwert erreicht.

7. Das Verfahren nach einem der vorstehenden Ansprüche 1 bis 6, worin das Eingangssignal ($s_{in}(t_i)$) Pseudoabstands- Information überträgt, die sich auf den Abstand einer Quelle des Eingangssignals ($s_{in}(t_i)$) zu einem Empfangspunkt des Eingangssignals ($s_{in}(t_i)$) bezieht, einschließlich des Schrittes der Verwendung (200) des verzögerungs-verriegelten Signals ($cp_0(t_i)$), das mit der Sichtlinien-Komponente verriegelt ist, um die Pseudoabstands- Information abzuschätzen.

8. Ein System zur Verfolgung eines Eingangssignals ($s_{in}(t_i)$), das eine Sichtlinien-Komponente und mindestens eine Multipfad-Komponente enthält, wobei das System enthält:

eine erste Verzögerungs-Verriegelungs-Schleife ($DLL_0$), die zum Verfolgen der Sichtlinien-Komponente ausgelegt ist, um davon ein verriegeltes Signal ($c_{p0}(t_i)$) abzuleiten, das mit der Sichtlinien-Komponente verriegelt ist; ein Subtraktionsknoten (100) zum Subtrahieren des verriegelten Signals ($c_{p0}(t_i)$) vom Eingangssignal ($s_{in}(t_i)$), um ein resultierendes Signal abzuleiten; mindestens eine weitere Verzögerungs-Verriegelungs-Schleife ($DLL_1,... DLL_m$), um das resultierende Signal zu verfolgen und davon mindestens ein weiteres verriegeltes Signal ($c_{p1}(t_i)$ to $c_{pm}(t_i)$) abzuleiten, das mit dem resultierenden Signal verriegelt ist, und mindestens ein weiterer Subtraktionsknoten (120,80) zum Subtrahieren des mindestens einen weiteren verriegelten Signals ($c_{p1}(t_i)$) vom Eingangssignal ($s_{in}(t_i)$), **dadurch gekennzeichnet, dass** der mindestens eine weitere Subtraktionsknoten (120, 80) so konfiguriert ist, um der ersten Verzögerungs-Verriegelungs-Schleife ($DLL_0$) das Eingangssignal ($s_{in}(t_i)$) zurückzuführen, von dem das mindestens eine weitere verriegelte Signal ($c_{p1}(t_i)$) subtrahiert wurde.

9. Das System von Anspruch 8, worin das Eingangssignal ($s_{in}(t_i)$) eine Sichtlinien-Komponente und eine Vielzahl von Multipfad-Komponenten enthält, und das System **dadurch gekennzeichnet ist, dass** es enthält:

eine Vielzahl von Verzögerungs-Verriegelungs-Schleifen ($DLL_1, .. DLL_m$), die konfiguriert sind, um die Multipfad-Komponenten des Eingangssignals($S_{in}(t_i)$) zu verfolgen, um daraus eine Vielzahl von verzögerungs-verriegelten Signalen ($c_{p1}(t_i)$ to $c_{pm}(t_i)$) abzuleiten, von denen jedes mit einer entsprechenden Multipfad-Komponente verriegelt ist, und der mindestens eine weitere Subtraktionsknoten (120,80) so konfiguriert ist, dass er die Vielzahl von weiteren verriegelten Signalen ($c_{p1}(t_i)$ to $c_{pm}(t_i)$) vom Eingangssignal ($s_{in}(t_i)$) subtrahiert und zur ersten Verzögerungs-Verriegelungs-Schleife ($DLL_0$) rück koppelt, wobei vom Eingangssignal ($s_{in}(t_i)$) die Vielzahl von weiteren verriegelten Signalen ($c_{p1}(t_i)$ to $c_{pm}(t_i)$) subtrahiert ist.

10. Das System von Anspruch 9, **dadurch gekennzeichnet, dass** es enthält:

eine Kaskade von Verzögerungs-Verriegelungs-Schleifen ($DLL_1,... DLL_m$), die so ausgelegt sind, dass sie die Multipfad-Komponenten des Eingangssignals ($S_{in}(t_i)$) verfolgen, und ein jeweiliger Subtraktionsknoten (100, 110) am Eingang jeder Verzögerungs-Verriegelungs-

Schleife ($DLL_1$, $DLL_m$) in der Kaskade, um ein jeweiliges resultierendes Signal zu erzeugen, das erhalten wird, indem vom Eingangssignal der Verzögerungs-Verriegelungs-Schleife unmittelbar stromaufwärts in der Kaskade das weitere verriegelte Signal ($c_{p1}(t_i)$ to $c_{pm}(t_i)$) subtrahiert (100, 110) wird, das in der Verzögerungs-Verriegelungs-Schleife unmittelbar stromaufwärts in der Kaskade erzeugt wurde, worin das Eingangssignal der ersten Verzögerungs-Verriegelungs-Schleife ($DLL_1$) in der Kaskade das resultierende Signal ist.

11. Das System nach einem der vorstehenden Ansprüche 8 bis 10, **dadurch gekennzeichnet, dass** es enthält:

die mindestens eine weitere Verzögerungs-Verriegelungs-Schleife ($DLL_1$ ...$DLL_m$) ist so konfiguriert, dass sie das mindestens eine weitere verzögerungs-verriegelte Signal ($c_{p1}(t_i)$) feststellt, das mit dem resultierenden Signal verriegelt ist, und
der mindestens eine weitere Subtraktionsknoten (120,80) ist selektiv aktivierbar (90), um das mindestens eine weitere verriegelte Signal ($c_{p1}(t_i)$) vom Eingangssignal ($s_{in}(t_i)$) abzuziehen, das der Verfolgung unterliegt, wenn (480) das mindestens eine weitere verriegelte Signal ($c_{p1}(t_i)$) mit dem resultierenden Signal verriegelt ist.

12. Das System nach Anspruch 9, **dadurch gekennzeichnet, dass** es enthält:

die Vielzahl von Verzögerungs-Verriegelungs-Schleifen ($DLL_1$, $DLL_m$), ist konfiguriert zur Feststellung der Vielzahl von verzögerungs-verriegelten Signalen ($c_{p1}(t_i)$ to $c_{pm}(t_i)$), von denen jedes mit der jeweiligen Multipfad-Komponente verriegelt ist, und
der mindestens eine weitere Subtraktionsknoten (120,80) ist selektiv aktivierbar (90) zum Subtrahieren (120,80) der Vielzahl von weiteren verriegelten Signalen ($c_{p1}(t_i)$ to $c_{pm}(t_i)$) vom Eingangssignal ($s_{in}(t_i)$), das der Verfolgung ($DLL_0$) unterliegt, wenn (480) die Vielzahl von verzögerungs-verriegelten Signalen ($C_{p1}(t_i)$ to $c_{pm}(t_i)$) mit der jeweiligen Multipfad-Komponente verriegelt ist.

13. Das System nach Anspruch 11 oder 12, **dadurch gekennzeichnet, dass** es mindestens einen Schalter (90) enthält, um selektiv den mindestens einen weiteren Subtraktionsknoten (120,80) zu aktivieren.

14. Das System nach einem der Ansprüche 8 bis 13, **dadurch gekennzeichnet, dass** es eine zugeordnete Multipfad-Überwachungseinheit (230) enthält, die ausgelegt ist zum:

Abschätzen (230) des Pegels der mindestens einen weiteren Multipfad - Komponente;
Definieren eines Schwellwerts für einen Multipfad-Pegel, und
Aktivieren (240) des Systems, wenn der Pegel der mindestens einen Multipfad-Komponente den Schwellwert erreicht.

15. Das System nach einem der vorstehenden Ansprüche 8 bis 14, zur Verwendung bei der Verfolgung eines Eingangssignals ($s_{in}(t_i)$), das Pseudoabstands-Information überträgt, die sich auf den Abstand von einer Quelle des Eingangssignals ($s_{in}(t_i)$) zu einem Empfangspunkt des Eingangssignals ($s_{in}(t_i)$) bezieht, wobei das System die Verzögerungs-Verriegelungs-Schleife ($DLL_0$) enthält, die dazu konfiguriert ist, das verzögerungs-verriegelte Signal ($c_{p0}(t_i)$) abzugeben (200), das mit der Sichtlinien-Komponente verriegelt ist, als eine Abschätzung der Pseudoabstands Information.

16. Ein Computerprogrammprodukt, das in den Speicher mindestens eines Computers geladen werden kann und Softwarecode-Teile enthält, die besonders zur Durchführung des Verfahrens nach einem der Ansprüche 1 bis 7 angepasst sind.

**Revendications**

1. Procédé de poursuite d'un signal d'entrée ($S_{in}(t_i)$) comprenant une composante de visibilité directe et au moins une composante de propagation par trajets multiples, le procédé comprenant les étapes consistant à :

- soumettre ledit signal d'entrée ($S_{in}(t_i)$) à une première poursuite ($DLL_0$) de ladite composante de visibilité directe qui y est contenue pour en déduire un signal à verrouillage de retard ($C_{p0}(t_i)$) verrouillé sur ladite composante de visibilité directe,
- soustraire (100) ledit signal verrouillé ($C_{p0}(t_i)$) dudit signal d'entrée ($S_{in}(t_i)$) pour obtenir un signal résultant,
- effectuer une poursuite ($DLL_1$) dudit signal résultant pour en déduire au moins un signal à verrouillage de retard additionnel ($C_{p1}(t_i)$) verrouillé sur ledit signal résultant, et
- soustraire (120, 80) ledit au moins un signal verrouillé additionnel ($C_{p1}(t_i)$) dudit signal d'entrée ($S_{in}(t_i)$) soumis à une poursuite ($DLL_0$),

**caractérisé en ce qu'**il comprend l'étape de réinjection dans ladite première poursuite dudit signal d'entrée ($S_{in}(t_i)$) dont ledit au moins un signal ver-

rouillé additionnel ($C_{p1}(t_i)$) a été soustrait.

**2.** Procédé selon la revendication 1, dans lequel ledit signal d'entrée ($S_{in}(t_i)$) comprend une composante de visibilité directe et une pluralité de composantes de propagation par trajets multiples, le procédé étant **caractérisé en ce qu'**il comprend les étapes consistant à :

- effectuer une poursuite desdites composantes de propagation par trajets multiples dudit signal d'entrée ($S_{in}(t_i)$) pour générer à partir de celles-ci une pluralité de signaux à verrouillage de retard ($C_{p1}(t_i)$ à $C_{pM}(t_i)$), verrouillés chacun sur l'une respective desdites composantes de propagation par trajets multiples, et
- soustraire (120, 80) ladite pluralité de signaux verrouillés additionnels ($C_{p1}(t_i)$ à $C_{pM}(t_i)$) dudit signal d'entrée ($S_{in}(t_i)$) soumis à une poursuite ($DLL_0$), et
- réinjecter dans ladite première poursuite ledit signal d'entrée ($S_{in}(t_i)$) dont ladite pluralité de signaux verrouillés additionnels ($C_{p1}(t_i)$ à $C_{pM}(t_i)$) a été soustraite.

**3.** Procédé selon la revendication 2, **caractérisé en ce qu'**il comprend les étapes consistant à :

- effectuer une poursuite desdites composantes de propagation par trajets multiples dudit signal d'entrée ($S_{in}(t_i)$) selon une cascade d'opérations de poursuite ($DLL_1$, ..., $DLL_M$), et
- exécuter chacune de ces opérations de poursuite ($DLL_1$, ..., $DLL_M$) sur un signal résultant respectif obtenu par le fait de soustraire (100, 110) du signal d'entrée de l'opération de poursuite immédiatement en amont dans la cascade le signal verrouillé additionnel ($C_{p1}(t_i)$ à $C_{pM}(t_i)$) généré dans ladite opération de poursuite immédiatement en amont dans la cascade, le signal d'entrée de l'opération de poursuite la plus en amont ($DLL_1$) dans ladite cascade étant ledit signal résultant.

**4.** Procédé selon l'une quelconque des revendications précédentes 1 à 3, **caractérisé en ce qu'**il comprend les étapes consistant à :

- détecter ledit au moins un signal à verrouillage de retard additionnel ($C_{p1}(t_i)$) verrouillé sur ledit signal résultant, et
- soustraire (120, 80) ledit au moins un signal verrouillé additionnel ($C_{p1}(t_i)$) dudit signal d'entrée ($S_{in}(t_i)$) soumis à une poursuite lorsque (480) ledit au moins un signal verrouillé additionnel ($C_{p1}(t_i)$) est verrouillé sur ledit signal résultant.

**5.** Procédé selon la revendication 2, **caractérisé en ce qu'**il comprend les étapes consistant à :

- détecter ladite pluralité de signaux à verrouillage de retard ($C_{p1}(t_i)$ à $C_{pM}(t_i)$) verrouillés chacun sur ladite composante respective desdites composantes de propagation par trajets multiples, et
- soustraire (120, 80) ladite pluralité de signaux verrouillés additionnels ($C_{p1}(t_i)$ à $C_{pM}(t_i)$) dudit signal d'entrée ($S_{in}(t_i)$) soumis à une poursuite ($DLL_0$) lorsque (480) ladite pluralité de signaux à verrouillage de retard ($C_{p1}(t_i)$ à $C_{pM}(t_i)$) sont verrouillés sur ladite composante respective desdites composantes de propagation par trajets multiples.

**6.** Procédé de poursuite d'un signal d'entrée ($S_{in}(t_i)$) comprenant une composante de visibilité directe et au moins une composante de propagation par trajets multiples, **caractérisé en ce qu'**il comprend les étapes consistant à :

- estimer (230) le niveau de ladite au moins une composante de propagation par trajets multiples,
- définir un seuil de niveau de propagation par trajets multiples, et
- activer (240) le processus selon l'une quelconque des revendications 1 à 5 lorsque le niveau de ladite au moins une composante de propagation par trajets multiples atteint ledit seuil.

**7.** Procédé selon l'une quelconque des revendications précédentes 1 à 6, dans lequel ledit signal d'entrée ($S_{in}(t_i)$) transporte des informations de pseudo-distance relative à la distance d'une source dudit signal d'entrée ($S_{in}(t_i)$) à un point de réception dudit signal d'entrée ($S_{in}(t_i)$), le procédé comprenant l'étape consistant à utiliser (200) ledit signal à verrouillage de retard ($C_{p0}(t_i)$) verrouillé sur ladite composante de visibilité directe pour l'estimation desdites informations de pseudo-distance.

**8.** Système pour effectuer une poursuite d'un signal d'entrée ($S_{in}(t_i)$) comprenant une composante de visibilité directe et au moins une composante de propagation par trajets multiples, le système comprenant :

- une première boucle à verrouillage de retard ($DLL_0$) configurée pour effectuer une poursuite de ladite composante de visibilité directe pour en déduire un signal verrouillé ($C_{p0}(t_i)$) verrouillé sur ladite composante de visibilité directe,
- un noeud de soustraction (100) pour soustraire ledit signal verrouillé ($C_{p0}(t_i)$) dudit signal d'entrée ($S_{in}(t_i)$) pour obtenir un signal résultant,
- au moins une boucle à verrouillage de retard

additionnelle ($DLL_1$, ..., $DLL_M$) pour effectuer une poursuite dudit signal résultant et en déduire au moins un signal verrouillé additionnel ($C_{p1}(t_i)$, ..., $C_{pM}(t_i)$) verrouillé sur ledit signal résultant, et

- au moins un noeud de soustraction additionnel (120, 80) pour soustraire ledit au moins un signal verrouillé additionnel ($C_{p1}(t_i)$) dudit signal d'entrée ($S_{in}(t_i)$), **caractérisé en ce que** ledit au moins un noeud de soustraction additionnel (120, 80) est configuré pour réinjecter dans ladite première boucle à verrouillage de retard ($DLL_0$) ledit signal d'entrée ($S_{in}(t_i)$) dont ledit au moins un signal verrouillé additionnel ($C_{p1}(t_i)$) a été soustrait.

9. Système selon la revendication 8, dans lequel ledit signal d'entrée ($S_{in}(t_i)$) comprend une composante de visibilité directe et une pluralité de composantes de propagation par trajets multiples, le système étant **caractérisé en ce qu'**il comprend :

    - une pluralité de boucles à verrouillage de retard ($DLL_1$, ..., $DLL_M$) configurée pour effectuer une poursuite desdites composantes de propagation par trajets multiples dudit signal d'entrée ($S_{in}(t_i)$) pour générer à partir de celles-ci une pluralité de signaux à verrouillage de retard ($C_{p1}(t_i)$ à $C_{pM}(t_i)$), verrouillés chacun sur l'une respective desdites composantes de propagation par trajets multiples, et
    - ledit au moins un noeud de soustraction additionnel (120, 80) configuré pour soustraire ladite pluralité de signaux verrouillés additionnels ($C_{p1}(t_i)$ à $C_{pM}(t_i)$) dudit signal d'entrée ($S_{in}(t_i)$) et réinjecter dans ladite première boucle à verrouillage de retard ($DLL_0$) ledit signal d'entrée ($S_{in}(t_i)$) dont ladite pluralité de signaux verrouillés additionnels ($C_{p1}(t_i)$ à $C_{pM}(t_i)$) a été soustraite.

10. Système selon la revendication 9, **caractérisé en ce qu'**il comprend :

    - une cascade de boucles à verrouillage de retard ($DLL_1$, ..., $DLL_M$) configurée pour effectuer une poursuite desdites composantes de propagation par trajets multiples dudit signal d'entrée ($S_{in}(t_i)$), et
    - un noeud de soustraction respectif (100, 110) à l'entrée de chaque boucle à verrouillage de retard ($DLL_1$, ..., $DLL_M$) dans ladite cascade pour générer un signal résultant respectif obtenu par le fait de soustraire (100, 110) du signal d'entrée de la boucle à verrouillage de retard immédiatement en amont dans la cascade le signal verrouillé additionnel ($C_{p1}(t_i)$ à $C_{pM}(t_i)$) généré dans ladite boucle à verrouillage de retard immédiatement en amont dans la cascade, le signal d'entrée de la première boucle à verrouillage de retard ($DLL_1$) dans ladite cascade étant ledit signal résultant.

11. Système selon l'une quelconque des revendications précédentes 8 à 10, **caractérisé en ce qu'**il comprend :

    - ladite au moins une boucle à verrouillage de retard additionnelle ($DLL_1$, ..., $DLL_M$) configurée pour détecter ledit au moins un signal à verrouillage de retard additionnel ($C_{p1}(t_i)$) verrouillé sur ledit signal résultant, et
    - ledit au moins un noeud de soustraction additionnel (120, 80) sélectivement activable (90) pour soustraire ledit au moins un signal verrouillé additionnel ($C_{p1}(t_i)$) dudit signal d'entrée ($S_{in}(t_i)$) soumis à une poursuite lorsque (480) ledit au moins un signal verrouillé additionnel ($C_{p1}(t_i)$) est verrouillé sur ledit signal résultant.

12. Système selon la revendication 9, **caractérisé en ce qu'**il comprend :

    - ladite pluralité de boucles à verrouillage de retard ($DLL_1$, ..., $DLL_M$) configurée pour détecter ladite pluralité de signaux à verrouillage de retard ($C_{p1}(t_i)$ à $C_{pM}(t_i)$) verrouillés chacun sur ladite composante respective desdites composantes de propagation par trajets multiples, et
    - ledit au moins un noeud de soustraction additionnel (120, 80) sélectivement activable (90) pour soustraire (120, 80) ladite pluralité de signaux verrouillés additionnels ($C_{p1}(t_i)$ à $C_{pM}(t_i)$) dudit signal d'entrée ($S_{in}(t_i)$) soumis à une poursuite ($DLL_0$) lorsque (480) ladite pluralité de signaux à verrouillage de retard ($C_{p1}(t_i)$ à $C_{pM}(t_i)$) sont verrouillés sur ladite composante respective desdites composantes de propagation par trajets multiples.

13. Système selon la revendication 11 ou la revendication 12, **caractérisé en ce qu'**il comprend au moins un commutateur (90) pour activer sélectivement ledit au moins un noeud de soustraction additionnel (120, 80).

14. Système selon l'une quelconque des revendications 8 à 13, **caractérisé en ce qu'**il comprend une unité de surveillance de propagation par trajets multiples (230) configurée pour :

    - estimer (230) le niveau de ladite au moins une composante de propagation par trajets multiples,
    - définir un seuil de niveau de propagation par trajets multiples, et
    - activer (240) le système lorsque le niveau de ladite au moins une composante de propagation par trajets multiples atteint ledit seuil.

15. Système selon l'une quelconque des revendications précédentes 8 à 14, à utiliser pour effectuer une poursuite d'un signal d'entrée ($S_{in}(t_i)$) transportant des informations de pseudo-distance relatives à la distance d'une source dudit signal d'entrée ($S_{in}(t_i)$) à un point de réception dudit signal d'entrée ($S_{in}(t_i)$), le système comprenant ladite boucle à verrouillage de retard ($DLL_0$) configurée pour délivrer (200) ledit signal à verrouillage de retard ($C_{p0}(t_i)$) verrouillé sur ladite composante de visibilité directe en tant qu'estimation desdites informations de pseudo-distance.

16. Produit de programme informatique, chargeable dans la mémoire d'au moins un ordinateur et comprenant des parties de code logiciel spécialement adaptées pour exécuter le procédé selon l'une quelconque des revendications 1 à 7.

**Fig. 1**

**Fig. 2**

$s_{in}(t_i)$

$s_0(t_i)$  $s_1(t_i)$  $s_M(t_i)$

$\dfrac{1}{a_0^\cdot}$  $\dfrac{1}{a_1^\cdot}$  $\dfrac{1}{a_M^\cdot}$

**DLL**$_0$  **DLL**$_1$  **DLL**$_M$

$c_{p_0}(t_i)$  $c_{p_1}(t_i)$  $c_{p_M}(t_i)$

210

220

## Fig. 3

250

240

$s_{in}(t)$

**I**

270

260

230

## Fig. 4

*Fig. 5*

*Fig. 6*

*Fig. 7*

*Fig. 8*

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- US 5347536 A
- US 6031881 B
- US 6636558 B

### Non-patent literature cited in the description

- **L.R. Weill.** Multipath mitigation. *GPS World,* 01 June 2003
- **M.S. Braasch.** Performance comparison of multipath mitigation receiver architectures. *Proceedings IEEE PLANS 1996 Position Location and Navigation Symposium,* 22 April 1996, 1309-1315
- **T. S. Rappaport.** *Wireless Communication,* 1996, 336-338
- **W. Parkinson ; J. J. Spilker.** Global Positioning System: Theory and application. *Progress in Astronautic and Aeronautics 1996,* vol. I, 547-568
- **G. W. Hein ; J. Godet ; J. Issler ; J. C. Martin ; R L. Rodriguez ; T. Pratt.** The GALILEO Frequency Structure and Signal Design. *Proceedings of the ION GPS 2001,* 1273-1282
- **R.D.J. Van Nee ; J. Siereveld ; P. Fenton ; B. Townsend.** The multipath estimating delay lock loop approaching theoretical accuracy limits. *Proceedings of the IEEE Position Location and Navigation Symposium,* 15 April 1994
- **R.D.J. Van Nee.** The multipath estimating delay lock loop. *Proceedings of the IEEE Second International Symposium on Spread Spectrum Techniques and Application (ISSSTA '92), Yokohama (JP),* 29 November 1992, 39-42
- **M.C. Laxton ; S.L. De Vilbiss.** GPS multipath mitigation during code tracking. *Proceedings of the American Control Conference,* June 1997, 1429-1433
- Employment of a multipath receiver structure in a combined GALILEO/UMTS receiver. **BISCHOFF et al.** VTC SPRING 2002. IEEE 55TH. VEHICULAR TECHNOLOGY CONFERENCE. IEEE VEHICULAR TECHNOLOGY CONFERENCE, 06 May 2002, vol. 1-4, 1844-1848
- **M. C. Laxton ; S. L. De Vilbiss.** GPS Multipath Mitigation During Code Tracking. *Proceedings of the American Control Conference,* June 1997, 1429-1433